# FASCICULE DE BREVET EUROPEEN

(11) **EP 2 823 150 B1**
(45) Date de publication et mention de la délivrance du brevet: **27.07.2016**
(21) Numéro de dépôt: 13715272.4
(22) Date de dépôt: 06.03.2013
(51) Int. Cl.: F01D 5/14, F01D 5/20, F01D 5/28

(54) **AUBE DE TURBOMACHINE COMPORTANT UN INSERT DE PROTECTION DE LA TETE DE L'AUBE**
SCHAUFEL EINER TURBOMASCHINE MIT EINEM EINSATZ ZUM SCHUTZ DER SCHAUFELSPITZE
TURBOMACHINE BLADE COMPRISING AN INSERT PROTECTING THE BLADE TIP

(30) Priorité: 09.03.2012 FR 1252150
(43) Date de publication de la demande: 14.01.2015
(73) Titulaire: Snecma Société Anonyme, 75015 Paris (FR)
(72) Inventeur: MARIN, Sébastien, F-77550 Moissy-Cramayel Cédex (FR)
(74) Mandataire: Brevalex
(86) Numéro de dépôt international: PCT/FR2013/050478
(87) Numéro de publication internationale: WO 2013/132189

(56) Documents cités:
- EP-A1- 1 312 762
- EP-A2- 2 348 192
- DE-A1- 1 428 165
- GB-A- 1 107 024
- GB-A- 2 050 530
- US-A1- 2003 082 053
- US-A1- 2008 159 868
- US-A1- 2010 050 435

## Description

### DOMAINE TECHNIQUE

L'invention concerne une aube de turbomachine, telle qu'un turbopropulseur d'avion, qui est réalisée de manière à limiter les marques laissées par le contact entre l'extrémité de l'aube et l'abradable du stator.

L'invention propose plus particulièrement une aube de turbomachine comportant un corps en matériau composite portant un insert au niveau de la tête de l'aube.

### ÉTAT DE LA TECHNIQUE ANTÉRIEURE

Dans une turbomachine, telle qu'une turbomachine d'aéronef, le stator de la turbomachine comporte une couche de matériau abradable apte à s'user facilement au contact d'un élément mobile, et plus particulièrement au contact des aubes mobiles qui sont montées sur le rotor.

Ce matériau abradable permet d'optimiser le jeu radial entre les aubes et le stator, pour limiter les fuites d'air.

Lors de la première mise en service de la turbomachine, le contact entre chaque aube et la couche d'abradable provoque une usure progressive de la couche d'abradable.

Dans une turbomachine récente, l'aube est réalisée en matériau composite, afin de limiter le poids total de la turbomachine et donc de l'aéronef.

Du fait de ce contact entre l'aube et la couche d'abradable, il a été constaté que l'extrémité libre, ou tête, de l'aube devient recouverte de certaines traces.

Ces traces ne nuisent pas à l'intégrité de l'aube, ni au bon fonctionnement de la turbomachine. Cependant, ces traces nuisent à l'aspect esthétique général de la turbomachine, ce qui pourrait gêner certaines personnes, qui pourraient s'interroger sur la solidité réelle des aubes.

L'utilisation d'inserts sur la tête d'une aube est connue, notamment du document EP-A-2.348.192, qui décrit un insert recouvrant la totalité de la tête de l'aube, ainsi que le bord d'attaque de l'aube et du document US-2003/802053 qui décrit un insert recouvrant la tête de l'aube, ainsi que la face d'intrados de l'aube et la face d'extrados de l'aube.

Un tel insert est relativement volumineux, il implique par conséquent une augmentation du poids général de l'aube. Cela va à l'encontre du processus d'allègement du poids général de la turbomachine par lequel une aube en matériau composite a été créée.

L'invention a pour but de proposer une aube comportant un insert protégeant l'aube des marques provenant de l'usure de la couche d'abradable, qui limite l'augmentation de poids de l'aube.

### EXPOSÉ DE L'INVENTION

L'invention propose une aube de rotor de turbomachine, qui comporte un corps s'étendant radialement par rapport à l'axe principal du rotor de la turbomachine et comportant une tête d'extrémité radiale externe, une face d'intrados située du côté amont du corps, dans le sens de rotation du rotor, un bord d'attaque d'orientation principale radiale, situé axialement en amont, par rapport à l'écoulement de gaz dans la turbomachine, et un bord de fuite d'orientation principale radiale, situé axialement en aval, par rapport à l'écoulement de gaz dans la turbomachine, l'aube comportant un insert recouvrant la tête du corps, l'insert étant constitué d'une première portion recouvrant radialement la tête de l'aube et d'une deuxième portion recouvrant en partie la face d'intrados de l'aube,
caractérisée en ce que la première portion de l'insert comporte un bord situé du côté aval de l'aube, dans le sens de rotation du rotor, qui affleure avec une face d'extrados du corps, qui est située du côté aval du corps, dans le sens de rotation du rotor,
et en ce que la section de l'insert selon un plan radial par rapport à l'axe du rotor est en forme de cornière dont la première portion de l'insert s'étend tangentiellement par rapport à l'axe principal du rotor et dont la deuxième portion s'étend globalement radialement par rapport à l'axe principal du rotor.

Une telle structure en forme de cornière de l'insert permet de limiter la matière utilisée pour former l'insert, tout en protégeant les parties de l'aube venant en contact avec la couche d'abradable.

De préférence, la deuxième portion de l'insert s'étend sur toute la dimension axiale de l'aube, depuis le bord d'attaque jusqu'au bord de fuite.

De préférence, la deuxième portion de l'insert comporte une face d'intrados qui affleure avec la face d'intrados du corps.

De préférence, la longueur radiale de la deuxième portion de l'insert est inférieure ou égale à 10 mm.

De préférence, les deux portions de l'insert sont réalisées à partir d'une seule pièce.

De préférence, les deux portions de l'insert sont réalisées en deux pièces distinctes.

De préférence, l'aube comporte un insert de protection qui recouvre au moins le bord d'attaque du corps et l'extrémité axiale amont de l'insert.

L'invention propose aussi une turbomachine comportant un rotor portant au moins une aube selon l'invention, et comportant un stator entourant le rotor, dans laquelle une paroi cylindrique intérieure du stator, qui est située axialement au niveau de ladite aube, comporte une couche de matériau abradable située radialement au niveau de la tête de l'aube, caractérisée en ce que l'aube comporte un insert qui est apte à venir en contact avec la couche de matériau abradable.

### BRÈVE DESCRIPTION DES DESSINS

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en perspective d'une aube comportant un insert réalisé conformément à l'invention ;
- la figure 2 est un détail à plus grande échelle de l'extrémité radiale de l'aube au niveau de laquelle l'insert est monté ;
- la figure 3 est une section selon un plan radial de l'extrémité radiale de l'aube représentée à la figure 2.

### EXPOSÉ DÉTAILLÉ DE MODES DE RÉALISATION PARTICULIERS

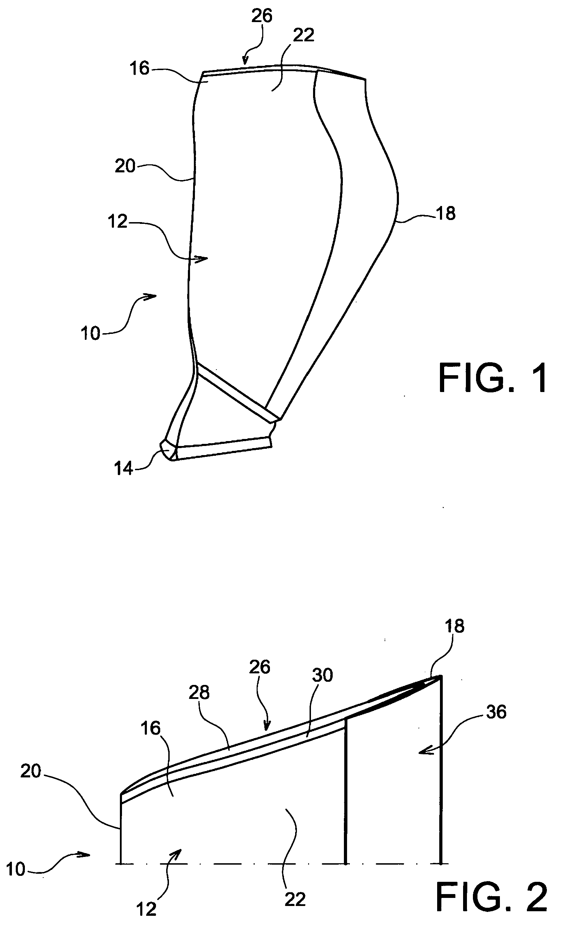

On a représenté à la figure 1 une aube 10 de turbomachine telle qu'une aube de soufflante pour une turbomachine d'aéronef.

L'aube 10 est destinée à être montée sur un rotor (non représenté) de la turbomachine. En position montée, l'aube 10 s'étend dans un plan orienté principalement radialement par rapport à l'axe principal du rotor.

Dans la description qui va suivre, on décrira l'aube 10 en utilisant cette orientation principale radiale de l'aube 10 par rapport à l'axe principal du rotor de la turbomachine. Ainsi, la direction radiale correspond à la direction de haut en bas en se reportant à la figure 1 et la direction axiale correspond à la direction de droite à gauche.

L'aube 10 comporte un corps principal 12 réalisé en matériau composite, qui s'étend dans le plan radial principal de l'aube 10, par rapport à l'axe principal du rotor.

Le corps 12 comporte un pied 14 radialement intérieur, qui s'étend selon la direction axiale et par lequel l'aube 10 est montée sur le rotor selon des moyens connus en soi. Le corps 12 comporte aussi une tête 16 radialement externe, qui est située à distance du rotor lorsque l'aube 10 est montée sur le rotor et qui est destinée à évoluer à proximité de la paroi interne du stator (non représenté) de la turbomachine.

Les bords d'extrémité axiale du corps 12 s'étendent principalement radialement, et consistent respectivement en un bord d'attaque 18 situé du côté amont du corps 12, selon le sens d'écoulement de l'air dans la turbomachine et qui est ici situé à droite de la figure 1, et un bord de fuite 20 situé du côté aval du corps 12.

Le corps 12 comporte aussi une face d'intrados 22 qui est la face située du côté amont du corps 12, dans le sens de rotation du rotor, et une face d'extrados 24, qui est la face située du côté aval du corps 12, dans le sens de rotation du rotor.

L'aube 10 comporte un insert 26 qui est monté sur la tête 16 du corps 12.

L'insert 26 a pour but de venir en contact avec une couche de matériau abradable (non représentée) recouvrant la paroi interne du stator, lors des premières mises en service de la turbomachine, c'est-à-dire lors du rodage de la turbomachine, pendant lesquelles les jeux radiaux de fonctionnement entre les aubes 10 et la paroi interne du stator sont établis.

L'insert 26 est réalisé en métal, de préférence en titane. Il sera compris que l'insert peut être réalisé en tout autre métal sans sortir de l'invention.

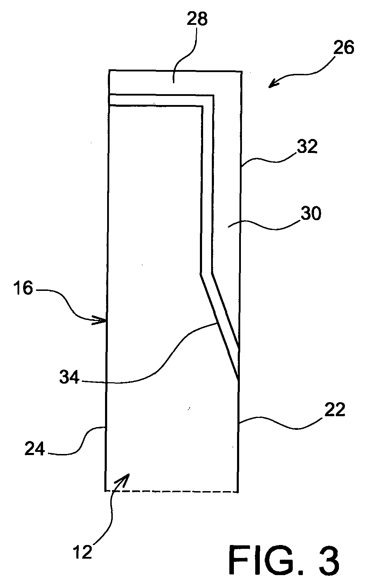

Comme on peut le voir plus en détails aux figures 2 et 3, l'insert 26 comporte une première portion 28 qui recouvre radialement la tête 16 du corps 12 et une deuxième portion 30 qui recouvre en partie la face d'intrados 22 du corps 12.

Comme on l'a dit précédemment, le corps 12 est réalisé en matériau composite afin de limiter le poids total de l'aube 10 et l'insert 26 est réalisé en métal.

Pour ne pas augmenter de manière trop importante le poids de l'aube 10, les dimensions de l'insert 26 sont réduites autant que possible.

A cet effet, comme on l'a représenté à la figure 3, la section de l'insert 26, selon un plan radial par rapport à l'axe du rotor, est en forme de cornière dont la première portion 28 de l'insert s'étend tangentiellement par rapport à l'axe principal du rotor et dont la deuxième portion 30 s'étend globalement radialement par rapport à l'axe principal du rotor.

L'insert 26 est réalisé de manière à prolonger radialement le corps 12 et de manière à participer à l'action aérodynamique de l'aube 10.

Pour cela, l'insert s'étend axialement sur toute la longueur axiale du corps 12, c'est-à-dire qu'il s'étend axialement depuis le bord d'attaque 18 jusqu'au bord de fuite 20.

La section de la première portion 28 selon un plan tangentiel par rapport à l'axe principal du rotor, est de forme similaire à la forme de la section du corps 12 selon un plan tangentiel, et l'épaisseur radiale de la première portion 28 est sensiblement identique en tout point.

L'épaisseur radiale de la première portion 28 de l'insert est comprise entre une valeur inférieure au millimètre été une valeur de quelques millimètres, comme par exemple 0.5 mm, 1 mm ou 2 mm, et la première portion de l'insert s'étend sur toute l'épaisseur du corps 12, c'est-à-dire depuis la face d'intrados 22 jusqu'à la face d'extrados 24.

La longueur radiale de la deuxième portion 30 de l'insert est elle aussi faible, de préférence, la longueur radiale de la deuxième portion 30 est inférieure ou égale à 10 mm.

Aussi, la deuxième portion 30 de l'insert 26 comporte une face d'intrados 32, qui affleure avec la face d'intrados 22 du corps 12 et qui prolonge radialement vers le haut la face d'intrados 22.

La tête 24 du corps 12 comporte à cet effet une gorge supérieure 34 qui s'étend axialement depuis le bord d'attaque 18 jusqu'au bord de fuite 20, dans laquelle la deuxième portion 30 de l'insert 26 est reçue.

Selon le mode de réalisation représenté aux figures, l'insert 26 est réalisé d'une seule pièce, c'est-à-dire que les deux portions 28, 30 de l'insert 26 sont deux parties d'une seule pièce.

Selon une variante de réalisation non représentée, les deux portions 28, 30 de l'insert 26 sont réalisées à partir de deux pièces distinctes, qui sont assemblées et montées sur le corps 12.

La fixation de l'insert 26 sur la tête du corps 12 est réalisée de préférence par collage. Pour cela, une couche de colle est disposée entre les faces en vis-à-vis de la tête 16 du corps 12 d'une part, et des portions 28, 30 de l'insert 26 d'autre part.

Selon un autre aspect de l'aube 10, un deuxième insert 36, lui aussi réalisé en métal, recouvre le bord d'attaque 18 de l'aube 10. Ce deuxième insert permet de protéger l'aube 10 contre des chocs pouvant être causés par exemple par l'ingestion d'oiseaux par la turbomachine.

Comme on l'a dit plus haut, l'insert 26 est réalisé de manière que les deux portions 18, 30 affleurent avec les faces d'intrados et d'extrados 22, 24 du corps.

Ainsi, l'insert 26 ne gène pas le positionnement ni la fixation du deuxième insert 36 sur l'aube 10. Le deuxième insert 36 peut en outre recouvrir l'insert 26.

## Revendications

1. Aube (10) de rotor de turbomachine, qui comporte un corps (12) s'étendant radialement par rapport à l'axe principal du rotor de la turbomachine et comportant :
- une tête (16) d'extrémité radiale externe ;
- une face d'intrados (22) située du côté amont du corps (12), dans le sens de rotation du rotor ;
- un bord d'attaque (18) d'orientation principale radiale, situé axialement en amont, par rapport à l'écoulement de gaz dans la turbomachine ; et
- un bord de fuite (20) d'orientation principale radiale, situé axialement en aval, par rapport à l'écoulement de gaz dans la turbomachine,
l'aube (10) comportant un insert (26) recouvrant la tête (16) du corps (12), l'insert (26) étant constitué d'une première portion (28) recouvrant radialement la tête (16) de l'aube (10) et d'une deuxième portion (30) recouvrant en partie la face d'intrados (22) de l'aube (10),
**caractérisée en ce que** la première portion (28) de l'insert (26) comporte un bord situé du côté aval de l'aube (10), dans le sens de rotation du rotor, qui affleure avec une face d'extrados (24) du corps (12), qui est située du côté aval du corps (12), dans le sens de rotation du rotor,
et **en ce que** la section de l'insert (26) selon un plan radial par rapport à l'axe du rotor est en forme de cornière dont la première portion (28) de l'insert (26) s'étend tangentiellement par rapport à l'axe principal du rotor et dont la deuxième portion (30) s'étend globalement radialement par rapport à l'axe principal du rotor.

2. Aube (10) de rotor selon la revendication précédente, **caractérisée en ce que** la deuxième portion (30) de l'insert (26) s'étend sur toute la dimension axiale de l'aube (10), depuis le bord d'attaque (18) jusqu'au bord de fuite (20).

3. Aube (10) de rotor selon l'une quelconque des revendications 1 ou 2, **caractérisée en ce que** la deuxième portion (30) de l'insert (26) comporte une face d'intrados (32) qui affleure avec la face d'intrados (22) du corps (12).

4. Aube (10) de rotor selon l'une quelconque des revendications précédentes, **caractérisée en ce que** la longueur radiale de la deuxième portion (30) de l'insert (26) est inférieure ou égale à 10 mm.

5. Aube (10) de rotor selon l'une quelconque des revendications précédentes, **caractérisée en ce que** les deux portions (28, 30) de l'insert (26) sont réalisées à partir d'une seule pièce.

6. Aube (10) de rotor selon l'une quelconque des revendications 1 à 4, **caractérisée en ce que** les deux portions (28, 30) de l'insert (26) sont réalisés en deux pièces distinctes.

7. Aube (10) de rotor selon l'une quelconque des revendications précédentes, **caractérisée en ce que** elle comporte un insert de protection (36) qui recouvre au moins le bord d'attaque (18) du corps (12) et l'extrémité axiale amont de l'insert (26).

8. Turbomachine comportant un rotor portant au moins une aube (10) selon l'une quelconque des revendications précédentes, et comportant un stator entourant le rotor, dans laquelle une paroi cylindrique intérieure du stator, qui est située axialement au niveau de ladite aube (10), comporte une couche de matériau abradable située radialement au niveau de la tête (16) de l'aube (10), **caractérisée en ce que** l'aube (10) comporte un insert (26) qui est apte à venir en contact avec la couche de matériau abradable.

## Patentansprüche

1. Schaufel (10) eines Rotors einer Turbomaschine, die einen Körper (12) umfasst, welcher sich in Bezug auf die Hauptachse des Rotors der Turbomaschine radial erstreckt und umfasst:
- eine Spitze (16) mit radialem äußeren Ende;
- eine vorderseitige Fläche (22), die auf der stromaufwärtigen Seite des Körpers (12) in der Rotationsrichtung des Rotors gelegen ist;
- eine Eintrittskante (18) mit radialer Hauptausrichtung, die in Bezug auf die Gasströmung in der Turbomaschine axial stromauf gelegen ist; und
- eine Austrittskante (20) mit radialer Hauptausrichtung, die in Bezug auf die Gasströmung in der Turbomaschine axial stromab gelegen ist,
wobei die Schaufel (10) einen Einsatz (26) umfasst, der die Spitze (16) des Körpers (12) bedeckt, wobei der Einsatz (26) von einem ersten Abschnitt (28), welcher die Spitze (16) der Schaufel (10) radial bedeckt, sowie von einem zweiten Abschnitt (30), welcher die vorderseitige Fläche (22) der Schaufel (10) teilweise bedeckt, gebildet ist,
**dadurch gekennzeichnet, dass** der erste Abschnitt (28) des Einsatzes (26) einen auf der stromabwärtigen Seite der Schaufel (10), in der Rotationsrichtung des Rotors gelegenen Rand umfasst, der mit einer rückseitigen Fläche (24) des Körpers (12), welche auf der stromabwärtigen Seite des Körpers (12), in der Rotationsrichtung des Rotors gelegen ist, bündig abschließt,
und dass der Querschnitt des Einsatzes (26) in einer radialen Ebene in Bezug auf die Achse des Rotors eine Winkelprofilform aufweist, wovon der erste Abschnitt (28) des Einsatzes (26) in Bezug auf die Hauptachse des Rotors tangential verläuft und wovon der zweite Abschnitt (30) in Bezug auf die Hauptachse des Rotors insgesamt radial verläuft.

2. Rotorschaufel (10) nach dem vorhergehenden Anspruch, **dadurch gekennzeichnet, dass** der zweite Abschnitt (30) des Einsatzes (26) sich über die gesamte axiale Abmessung der Schaufel (10), von der Eintrittskante (18) bis zu der Austrittskante (20) erstreckt.

3. Rotorschaufel (10) nach einem der Ansprüche 1 oder 2, **dadurch gekennzeichnet, dass** der zweite Abschnitt (30) des Einsatzes (26) eine vorderseitige Fläche (32) umfasst, die mit der vorderseitigen Fläche (22) des Körpers (12) bündig abschließt.

4. Rotorschaufel (10) nach einem der vorhergehenden Ansprüche, **dadurch gekennzeichnet, dass** die radiale Länge des zweiten Abschnitts (30) des Einsatzes (26) weniger als oder gleich 10 mm beträgt.

5. Rotorschaufel (10) nach einem der vorhergehenden Ansprüche, **dadurch gekennzeichnet, dass** die beiden Abschnitte (28, 30) des Einsatzes (26) aus einem einzigen Teil ausgebildet sind.

6. Rotorschaufel (10) nach einem der Ansprüche 1 bis 4, **dadurch gekennzeichnet, dass** die beiden Abschnitte (28, 30) des Einsatzes (26) aus zwei getrennten Teilen ausgebildet sind.

7. Rotorschaufel (10) nach einem der vorhergehenden Ansprüche, **dadurch gekennzeichnet, dass** sie einen Schutzeinsatz (36) umfasst, der wenigstens die Eintrittskante (18) des Körpers (12) und das stromaufwärtige axiale Ende des Einsatzes (26) bedeckt.

8. Turbomaschine, die einen Rotor umfasst, der wenigstens eine Schaufel (10) nach einem der vorhergehenden Ansprüche trägt, und die einen den Rotor umgebenden Stator umfasst, wobei eine zylindrische Innenwand des Stators, die axial im Bereich der Schaufel (10) gelegen ist, eine Schicht aus Abriebmaterial, welche radial im Bereich der Spitze (16) der Schaufel (10) gelegen ist, umfasst, **dadurch gekennzeichnet, dass** die Schaufel (10) einen Einsatz (26) umfasst, der geeignet ist, mit der Schicht aus Abriebmaterial in Kontakt zu kommen.

## Claims

1. A turbomachine rotor blade (10) comprising a body (12) radially extending with respect to the main axis of the turbomachine rotor and comprising:
- an outer radial end tip (16);
- an intrados face (22) located on the upstream side of the body (12), in the direction of rotation of the rotor;
- a leading edge (18) with a radial main orientation, axially located upstream, with respect to the gas flow in the turbomachine; and
- a trailing edge (20) with a radial main orientation, axially located downstream, with respect to the gas flow in the turbomachine,
the blade (10) comprising an insert (26) covering the tip (16) of the body (12), the insert (26) being comprised of a first portion (28) radially covering the blade (10) tip (16) and a second portion (30) partly covering the intrados face (22) of the blade (10),
**characterised in that** the first portion (28) of the insert (26) comprising an edge located on the downstream side of the blade (10), in the direction of rotation of the rotor, which is levelled with an extrados face (24) of the body (12), which is located on the downstream side of the body (12), in the direction of rotation of the rotor,
and in tha the cross-section of the insert (26) along a radial plane with respect to the rotor axis is corner-shaped wherein the first portion (28) of the insert (26) tangentially extends with respect to the main axis of the rotor and the second portion (30) extends globally radially with respect to the main axis of the rotor.

2. The rotor blade (10) according to the preceding claim, **characterised in that** the second portion (30) of the insert (26) extends throughout the whole axial dimension of the blade (10), from the leading edge (18) to the trailing edge (20).

3. The rotor blade (10) according to any of the preceding claims 1 or 2, **characterised in that** the second portion (30) of the insert (26) comprises an intrados face (32) which is levelled with the intrados face (22) of the body (12).

4. The rotor blade (10) according to any of the preceding claims, **characterised in that** the radial length of the second portion (30) of the insert (26) is equal to or lower than 10 mm.

5. The rotor blade (10) according to any of the preceding claims, **characterised in that** both portions (28, 30) of the insert (26) are made from a single piece.

6. The rotor blade (10) according to any of claims 1 to 4, **characterised in that** both portions (28, 30) of the insert (26) are made in two distinct pieces.

7. The rotor blade (10) according to any of the preceding claims, **characterised in that** it comprises a protecting insert (36) covering at least the leading edge (18) of the body (12) and the upstream axial end of the insert (26).

8. A turbomachine comprising a rotor carrying at least a blade (10) according to any of the preceding claims, and comprising a stator surrounding the rotor, wherein an inner cylindrical wall of the stator, which is axially located at said blade (10), comprises an abradable material layer radially located at said blade (10) tip (16), **characterised in that** the blade (10) comprises an insert (26) which is able to contact the abradable material layer.
